# EUROPÄISCHE PATENTSCHRIFT

(11) **EP 3 733 037 B1**
(45) Veröffentlichungstag und Bekanntmachung des Hinweises auf die Patenterteilung: **12.01.2022**
(21) Anmeldenummer: 20168123.6
(22) Anmeldetag: 06.04.2020
(51) Int. Cl.: A47L 9/28

(54) **SYSTEM AUS EINEM MANUELL GEFÜHRTEN BODENBEARBEITUNGSGERÄT, EINEM AUSSCHLIESSLICH AUTOMATISCH BETRIEBENEN BODENBEARBEITUNGSGERÄT UND EINER RECHENEINRICHTUNG**
SYSTEM COMPRISING A MANUALLY GUIDED SOIL WORKING IMPLEMENT, AN EXCLUSIVELY AUTOMATICALLY OPERATED SOIL WORKING IMPLEMENT AND A COMPUTING DEVICE
SYSTÈME COMPRENANT UN APPAREIL DE TRAITEMENT DU SOL GUIDÉ À LA MAIN, UN APPAREIL DE TRAITEMENT DU SOL À FONCTIONNEMENT ENTIÈREMENT AUTOMATIQUE ET UN DISPOSITIF DE CALCUL

(30) Priorität: 11.04.2019 DE 102019109596
(43) Veröffentlichungstag der Anmeldung: 04.11.2020
(73) Patentinhaber: Vorwerk & Co. Interholding GmbH, 42275 Wuppertal (DE)
(72) Erfinder: Arnold, Hans-Peter, 58566 Kierspe (DE); Büning, Thomas, 44795 Bochum (DE); Fleczok, Benjamin, 45144 Essen (DE); Frielinghaus, Robert, 44803 Bochum (DE); Helmich, Martin, 47239 Duisburg (DE); Hillen, Lorenz, 42287 Wuppertal (DE); Holz, Christian, 44137 Dortmund (DE); Isenberg, Gerhard, 50668 Köln (DE); Mosebach, Andrej, 59425 Unna (DE); Ortmann, Roman, 47057 Duisburg (DE); Schmitz, Kevin, 40599 Düsseldorf (DE); Vitz, Fabian, 42327 Wuppertal (DE); van Teeffelen, Niklas, 40223 Düsseldorf (DE); Kemker, Uwe, 42105 Wuppertal (DE); Hackert, Georg, 8832 Wilen bei Wollerau (CH)
(74) Vertreter: Müller, Enno

(56) Entgegenhaltungen:
- EP-A1- 3 415 065
- EP-A1- 3 415 070
- US-A1- 2018 344 114

## Beschreibung

### Gebiet der Technik

Die Erfindung betrifft ein System aus einem manuell von einem Nutzer innerhalb einer Umgebung geführten ersten Bodenbearbeitungsgerät, einem ausschließlich automatisch betriebenen zweiten Bodenbearbeitungsgerät und einer Recheneinrichtung, wobei das erste Bodenbearbeitungsgerät eine Detektionseinrichtung zur Detektion eines Parameters der Umgebung und/oder einer zu bearbeitenden Fläche aufweist, und wobei das zweite Bodenbearbeitungsgerät eine Navigationseinrichtung zur Navigation und Selbstlokalisierung in der Umgebung aufweist.

### Stand der Technik

Bodenbearbeitungsgeräte sind im Stand der Technik als manuell von einem Nutzer geführte oder sich selbsttätig fortbewegende Geräte bekannt. Ein Beispiel ist aus der US 2018/344114 bekannt. Des Weiteren ist es auch bekannt, innerhalb beispielsweise eines Haushalts ein System aus mehreren Bodenbearbeitungsgeräten zu betreiben und die Vorteile der manuell geführten Bodenbearbeitung und der automatisch betriebenen Bodenbearbeitung ergänzend zu nutzen.

Bodenbearbeitungsgeräte im Sinne der Erfindung können beispielsweise Reinigungsgeräte wie Staubsauger und/oder Feucht-Wischgeräte, oder Poliergeräte, Bohnergeräte, Schleifgeräte, Rasenmähgeräte oder ähnliches sein. Manuell von einem Nutzer geführte Bodenbearbeitungsgeräte zeichnen sich dabei üblicherweise durch einen Stiel und/oder Griff aus, an welchem der Nutzer das Bodenbearbeitungsgerät über eine zu bearbeitende Fläche, beispielsweise Bodenfläche oder Überbodenfläche, führen kann. Die automatisch betriebenen Bodenbearbeitungsgeräte zeichnen sich durch eine Navigationseinrichtung zur selbsttätigen Orientierung und Lokalisierung innerhalb einer Umgebung, vorzugsweise anhand einer Umgebungskarte, aus, wobei das automatische Bodenbearbeitungsgerät selbsttätig innerhalb der Umgebung verfahren kann, anhand der Umgebungskarte navigiert und dabei gegebenenfalls Bodenbearbeitungstätigkeiten ausführt.

Aus der EP 3 345 524 A1 ist beispielsweise ein System aus zwei oder mehr Bodenbearbeitungsgeräten bekannt, welche sich über eine zu bearbeitende Fläche bewegen und eine Bearbeitung dieser in Abhängigkeit von einem Flächenparameter der Fläche durchführen, wobei detektierte Flächenparameter und korrespondierende Geräteparameter in einer gemeinsamen Datenbank hinterlegt werden, auf welche die Bodenbearbeitungsgeräte zugreifen und einen Geräteparameter und/oder einen Flächenparameter für eine zeitlich spätere Bodenbearbeitung hinterlegen und/oder auswählen können.

### Zusammenfassung der Erfindung

Ausgehend von dem vorgenannten Stand der Technik ist es Aufgabe der Erfindung, ein System aus einem manuell geführten Bodenbearbeitungsgerät und einem automatisch betriebenen Bodenbearbeitungsgerät so weiterzubilden, dass ein optimales Bearbeitungsergebnis und/oder eine optimale Bearbeitungsstrategie erreicht werden kann.

Zur Lösung der vorgenannten Aufgabe schlägt die Erfindung vor, dass die Recheneinrichtung des Systems eingerichtet ist, anhand des von der Detektionseinrichtung des ersten Bodenbearbeitungsgerätes detektierten Parameters zu ermitteln, ob ein bestimmter Flächenteilbereich der zu bearbeitenden Fläche für eine Bodenbearbeitung durch das zweite Bodenbearbeitungsgerät geeignet ist.

Erfindungsgemäß ist die Recheneinrichtung nun ausgebildet, anhand der mittels des ersten Bodenbearbeitungsgerätes aufgenommenen Daten zu ermitteln, ob eine bestimmte Teilfläche auch oder anstelle des ersten Bodenbearbeitungsgerätes mit dem zweiten Bodenbearbeitungsgerät gereinigt werden könnte. Die Recheneinrichtung kann eine lokale Recheneinrichtung des ersten oder zweiten Bodenbearbeitungsgerätes sein, oder alternativ eine separat zu den Bodenbearbeitungsgeräten ausgebildete Recheneinrichtung, die beispielsweise in einem mobilen Endgerät des Nutzers, einem ortsfesten PC, einem entfernten Server oder ähnlichem angeordnet ist. Zur Kommunikation zwischen der Recheneinrichtung und den Bodenbearbeitungsgeräten weist das System vorzugsweise ein Kommunikationsnetzwerk, insbesondere ein drahtloses Kommunikationsnetzwerk, beispielsweise ein WLAN, auf. Während der Nutzer das erste Bodenbearbeitungsgerät manuell über die zu bearbeitende Fläche führt, detektiert die Detektionseinrichtung des ersten Bodenbearbeitungsgerätes einen oder mehrere Parameter der Umgebung bzw. der zu bearbeitenden Fläche. Diese Daten können schon bereits während der Verwendung des ersten Bodenbearbeitungsgerätes oder auch nach abgeschlossener Bodenbearbeitungstätigkeit mittels der Recheneinrichtung verarbeitet werden, um die aufgezeichneten Parameter dahingehend auszuwerten, ob eine oder mehrere Flächenteilbereiche der Umgebung für eine Bodenbearbeitung durch das zweite, nämlich ausschließlich automatisch betriebene Bodenbearbeitungsgerät geeignet sind. Dadurch kann die Umgebung des Systems in Flächenteilbereiche untergliedert werden, die nur für eine Bodenbearbeitung durch das erste Bodenbearbeitungsgerät, nur für eine Bodenbearbeitung durch das zweite Bodenbearbeitungsgerät oder für eine Bodenbearbeitung sowohl durch das erste Bodenbearbeitungsgerät als auch durch das zweite Bodenbearbeitungsgerät geeignet sind. Die Recheneinrichtung kann des Weiteren über eine Umgebungskarte verfügen, in welcher die Flächenteilbereiche definiert werden, und in welcher hinterlegt wird, welches oder welche Bodenbearbeitungsgeräte des Systems für die Bodenbearbeitung des jeweiligen Flächenteilbereiches geeignet sind. Vorzugsweise werden durch das automatisch betriebene, zweite Bodenbearbeitungsgerät bearbeitbare Flächenteilbereiche auch tatsächlich durch das zweite Bodenbearbeitungsgerät bearbeitet, damit der Nutzer eine manuelle Bodenbearbeitung mittels des ersten Bodenbearbeitungsgerätes in so wenig Flächenteilbereichen wie möglich durchführen muss. Dies ermöglicht dem Nutzer insbesondere eine zeitsparende Bodenbearbeitung in der Umgebung, bei welcher so viele Bodenbearbeitungsschritte wie möglich automatisch durch das zweite Bodenbearbeitungsgerät übernommen werden.

Es wird vorgeschlagen, dass der von der Detektionseinrichtung des ersten Bodenbearbeitungsgerätes detektierte Parameter ein die Bodenbearbeitung und/oder Befahrbarkeit des Flächenteilbereiches einschränkender und/ oder verhindernder Parameter des Flächenteilbereiches ist. Insbesondere kann der Parameter eine Bodenart, eine Verschmutzungsart, ein Verschmutzungsgrad, eine Verschmutzungshäufigkeit und/oder ein stehendes oder hängendes Hindernis sein. Die detektierten Parameter unterscheiden Flächenteilbereiche, in welchen eine Bodenbearbeitung durch das zweite Bodenbearbeitungsgerät möglich ist, von Flächenteilbereichen, in welchen eine Bodenbearbeitung durch das zweite Bodenbearbeitungsgerät nicht möglich ist. Beispielsweise ist es möglich, dass eine Bodenart, eine Verschmutzungsart, ein Verschmutzungsgrad, eine Verschmutzungshäufigkeit und/oder ein den jeweiligen Flächenteilbereich betreffendes Hindernis eine Bodenbearbeitung durch das zweite Bodenbearbeitungsgerät gerade ausschließt, da das zweite Bodenbearbeitungsgerät beispielsweise aufgrund seiner räumlichen Dimension, seiner zur Verfügung stehenden Bearbeitungsleistung oder anderer Geräteparameter nicht geeignet ist. Der Parameter "Bodenart" kann klassifiziert werden in beispielsweise Hartboden, Teppichboden, Teppich, hochflorige Teppiche bzw. Teppichboden, niedrigflorige Teppiche bzw. Teppichboden, leicht verschiebbare Teppiche oder Läufer. Der Parameter "Verschmutzungsart" kann beispielsweise aufgeteilt werden in Grobgut, Feingut, Staub, Essensreste, klebrige Verschmutzungen, Flüssigkeiten oder ähnliches. Der Parameter "Verschmutzungsgrad" kann eingeteilt werden in unterschiedliche Verschmutzungsstufen wie beispielsweise nicht verschmutzt, leicht verschmutzt, durchschnittlich stark verschmutzt, überdurchschnittlich stark verschmutzt, sehr verschmutzt. Selbstverständlich ist auch eine feinere Unterteilung des Verschmutzungsgrades möglich. Der Parameter "Verschmutzungshäufigkeit" gibt an, wie oft eine Bodenbearbeitung bzw. Reinigung durch das Bodenbearbeitungsgerät erfolgen sollte. Vor einer Küchenarbeitsplatte oder unter einem Esstisch kann beispielsweise eine sehr häufige Verschmutzung zu verzeichnen sein, so dass ebenso auch sehr häufig eine Bodenbearbeitung in diesem Flächenteilbereich zu erfolgen hat. Die Recheneinrichtung des Systems kann dann ermitteln, ob das automatisch arbeitende Bodenbearbeitungsgerät für derart häufige Arbeitseinsätze zur Verfügung steht, insbesondere unter Berücksichtigung einer Akkumulatorladung. Des Weiteren ist ein detektierter Parameter vorzugsweise auch die Anwesenheit oder Nicht-Anwesenheit eines Hindernisses vor, in oder über dem betreffenden Flächenteilbereich, wobei das detektierte Hindernis insbesondere eine Befahrbarkeit bzw. Bodenbearbeitung durch das zweite Bodenbearbeitungsgerät ausschließen kann, beispielsweise weil das Bodenbearbeitungsgerät gar nicht erst in den Flächenteilbereich hineinfahren kann oder aber vor ein stehendes oder über dem Flächenteilbereich hängendes Hindernis stoßen würde. Die Detektionseinrichtung zur Aufzeichnung dieser Parameter kann beispielsweise eine Kamera, ein Abstandssensor, ein Kontaktsensor, ein Partikelsensor, eine Detektionseinrichtung zur Detektion einer Stromaufnahme eines Antriebsmotors des Bodenbearbeitungsgerätes oder ähnliches sein.

Des Weiteren wird vorgeschlagen, dass die Recheneinrichtung eingerichtet ist, aus mindestens einem detektierten Parameter eine für einen bestimmten Flächenteilbereich charakteristische Kennzahl zu errechnen. Die vorzugsweise dimensionslose Kennzahl ermöglicht eine Vergleichbarkeit der Detektionsergebnisse in verschiedenen Flächenteilbereichen der Umgebung oder auch in demselben Flächenteilbereich zu verschiedenen Zeitpunkten. Die charakteristische Kennzahl kann aus nur einem einzigen detektierten Parameter, oder auch aus mehreren detektierten Parametern errechnet werden. Bezogen auf einen Verschmutzungsgrad kann eine Verschmutzung beispielsweise mit einem Verschmutzungsgrad zwischen "1" und "5" angegeben werden. Sofern es sich bei dem detektierten Parameter um eine Bodenart handelt, kann auch dieser, beispielsweise als Kennzahl für eine Intensität der Bodenbearbeitung in Stufen von 1 bis 5 dargestellt werden, von "1" für "einfach zu reinigen" bis "5" für "schwierig zu reinigen". Ein Hartboden würde beispielsweise die Ziffer "1" bekommen, während ein hochfloriger Teppichboden mit "5" bewertet wird. Je niedriger die Kennzahl ist, auch eine Kennzahl, welche von unterschiedlichen Parametern abhängt, desto wahrscheinlicher eignet sich der betreffende Flächenteilbereich für eine Bearbeitung durch das automatische, zweite Bodenbearbeitungsgerät. Bei einer Kennzahl von "1" ist das zweite Bodenbearbeitungsgerät ohne Einschränkungen geeignet, die Bodenbearbeitung dieses Flächenteilbereiches vorzunehmen. Bei einer Kennzahl von "5" ist eine erfolgreiche Bodenbearbeitung durch das zweite Bodenbearbeitungsgerät ausgeschlossen. Die Recheneinrichtung generiert somit für eine oder mehrere Flächenteilbereiche der zu bearbeitenden Fläche eine Art Index, der ausdrückt, ob ein Flächenteilbereich geeignet wäre, mittels des zweiten Bodenbearbeitungsgerätes gereinigt zu werden. Typische Indikatoren dafür, dass ein Flächenteilbereich mittels des zweiten Bodenbearbeitungsgerätes bearbeitet werden kann, sind beispielsweise ein unkritischer Bodenbelag, der keine Tiefenreinigung erfordert, oder eine weitgehend hindernisfreie Fläche, die für das zweite Bodenbearbeitungsgerät einfach zu reinigen ist. Ein Parameter, anhand dessen ebenfalls eine Bearbeitbarkeit durch das zweite Bodenbearbeitungsgerät bemessen werden kann, ist beispielsweise auch, ob Flächenteilbereiche geometrisch so zusammenhängen, dass diese direkt im Anschluss nacheinander bearbeitet werden können, ohne Flächenteilbereiche überqueren zu müssen, die einer Bearbeitung durch das zweite Bodenbearbeitungsgerät nicht zugänglich sind.

Des Weiteren wird vorgeschlagen, dass die charakteristische Kennzahl zusätzlich von einem Parameter des zweiten Bodenbearbeitungsgerätes abhängig ist. Ein solcher Parameter des zweiten Bodenbearbeitungsgerätes kann beispielsweise dessen Höhe über einer Bodenfläche, Breite, Volumen, geometrische Form, verfügbares Arbeitszubehör, verfügbare Leistungsstufen, verfügbarer Ladestatus eines Akkumulators oder ähnliches sein. Der Parameter des zweiten Bodenbearbeitungsgerätes kann insbesondere ein charakteristischer Geräteparameter und/oder Bearbeitungsparameter des zweiten Bodenbearbeitungsgerätes sein. Somit hängt die Kennzahl, d. h. gleichzeitig auch die Bearbeitbarkeit, des definierten Flächenteilbereiches nicht nur von den Parametern des Flächenteilbereichs ab, sondern vielmehr auch von einem oder mehreren Parametern des zweiten Bodenbearbeitungsgerätes, welches gegebenenfalls zur Bodenbearbeitung dieses Flächenteilbereiches verwendet werden soll.

Insbesondere wird vorgeschlagen, dass das erste Bodenbearbeitungsgerät eingerichtet ist, eine Information an das zweite Bodenbearbeitungsgerät zu übermitteln, dass der bestimmte Flächenteilbereich für eine Bodenbearbeitung durch das zweite Bodenbearbeitungsgerät geeignet ist. Das manuell von einem Nutzer geführte erste Bodenbearbeitungsgerät teilt dem automatisch betriebenen zweiten Bodenbearbeitungsgerät somit mit, insbesondere anhand der zuvor beschriebenen Kennzahlen, welche Flächenteilbereiche von dem zweiten Bodenbearbeitungsgerät bearbeitet werden können. Das zweite Bodenbearbeitungsgerät kann diese Flächenteilbereiche anschließend bearbeiten. Dabei kann gegebenenfalls eine vorteilhafte Reihenfolge der Bodenbearbeitung mehrerer Flächenteilbereiche festgelegt werden. Alternativ oder zusätzlich kann vorgesehen sein, dass das zweite Bodenbearbeitungsgerät eingerichtet ist, eine Information an das erste Bodenbearbeitungsgerät zu übermitteln, ob der bestimmte Flächenteilbereich für eine Bodenbearbeitung durch das zweite Bodenbearbeitungsgerät geeignet ist. Gemäß dieser Ausgestaltung kann das zweite Bodenbearbeitungsgerät bei der Ausführung einer Bodenbearbeitungstätigkeit - oder insbesondere auch im Vorhinein - feststellen, dass es Probleme bei der Bodenbearbeitung bestimmter Flächenteilbereiche hat. Diese Flächenteilbereiche können zum Beispiel auch solche sein, welche die Recheneinrichtung zuvor als für eine Bodenbearbeitung durch das zweite Bodenbearbeitungsgerät geeignet eingestuft hat. Das zweite Bodenbearbeitungsgerät kann diese Flächenteilbereiche dem ersten Bodenbearbeitungsgerät mitteilen. Insbesondere kann auch eine eigene Recheneinrichtung des zweiten Bodenbearbeitungsgerätes aus den Detektionsdaten des ersten Bodenbearbeitungsgerätes ermitteln, welche Flächenteilbereiche sehr gut von dem zweiten Bodenbearbeitungsgerät bearbeitet werden können. Das zweite Bodenbearbeitungsgerät kann diese zukünftig autonom bearbeiten.

In diesem Zusammenhang wird insbesondere vorgeschlagen, dass das zweite Bodenbearbeitungsgerät eine Recheneinrichtung aufweist, die eingerichtet ist, die Information des ersten Bodenbearbeitungsgerätes bei einer Navigation mittels der Navigationseinrichtung und/oder bei einer anhand eines Tätigkeitskalenders im Voraus geplanten Tätigkeit zu berücksichtigen, so dass das zweite Bodenbearbeitungsgerät den definierten Flächenteilbereich bearbeitet. Gemäß einer Ausgestaltung weist das automatisch betriebene zweite Bodenbearbeitungsgerät einen Tätigkeitskalender auf, in welchem zukünftige Bearbeitungstätigkeiten für das Bodenbearbeitungsgerät geplant sind. Dieser Kalender kann beispielsweise nach Datum und/oder Uhrzeit gespeicherte Bodenbearbeitungstätigkeiten aufweisen, welche einmalig oder auch wiederkehrend durch das zweite Bodenbearbeitungsgerät auszuführen sind. Beispielsweise kann eine geplante Tätigkeit beinhalten, dass ein Kinderzimmer jeden Montagvormittag um 10:00 Uhr gereinigt wird. Wenn die Recheneinrichtung Flächenteilbereiche einer Umgebung ermittelt, die mittels des zweiten Bodenbearbeitungsgerätes gereinigt werden können, wird eine diesbezügliche Information an das zweite Bodenbearbeitungsgerät übermittelt, so dass ein entsprechender Eintrag in den Tätigkeitskalender erfolgen kann. Für die Festlegung einer bevorzugten Wiederholung der Bodenbearbeitungstätigkeit kann auch eine Verschmutzungshäufigkeit herangezogen werden, die zuvor mittels der Detektionseinrichtung des ersten Bodenbearbeitungsgerätes ermittelt wurde. Das zweite Bodenbearbeitungsgerät fährt die von ihm bearbeitbaren Flächenteilbereiche dann entweder sofort oder nach Maßgabe eines geplanten Einsatz- und/oder Pfadplans an.

Des Weiteren wird vorgeschlagen, dass das erste Bodenbearbeitungsgerät eine Nutzerschnittstelle aufweist, mittels welcher einem Nutzer angezeigt wird, dass ein bestimmter Flächenteilbereich der zu bearbeitenden Fläche, insbesondere ein aktuell von dem ersten Bodenbearbeitungsgerät überfahrener Flächenteilbereich, für eine Bodenbearbeitung durch das zweite Bodenbearbeitungsgerät geeignet ist. Gemäß dieser Ausgestaltung wird der Nutzer bei einer manuellen Bodenbearbeitung eines Flächenteilbereiches von dem von ihm bedienten ersten Bodenbearbeitungsgerät darauf aufmerksam gemacht, wenn er einen für das zweite Bodenbearbeitungsgerät geeigneten Flächenteilbereich bearbeitet, so dass er den Bodenbearbeitungsvorgang abbrechen kann und sich denjenigen Flächenteilbereichen zuwendet, die stattdessen nicht von dem zweiten Bodenbearbeitungsgerät bearbeitet werden können, sondern einer manuellen Bodenbearbeitung durch das erste Bodenbearbeitungsgerät bedürfen. Diese Ausgestaltung ist besonders vorteilhaft, da der Nutzer dann nur diejenigen Flächenteilbereiche manuell reinigt, die tatsächlich nicht von dem zweiten Bodenbearbeitungsgerät bearbeitet werden können. Hierdurch lässt sich der Aufwand für den Nutzer erheblich reduzieren und ein großer Anteil der auszuführenden Bodenbearbeitungen kann automatisch durch das zweite Bodenbearbeitungsgerät erfolgen. Die Nutzerschnittstelle des ersten Bodenbearbeitungsgerätes kann beispielsweise ein Display sein, welches eine Mitteilung in Text- und/oder Bildform ausgibt. Des Weiteren kann die Nutzerschnittstelle auch eine akustische Ausgabeeinrichtung sein, die beispielsweise einen Ton oder eine Tonfolge abspielt, wenn es sich um einen durch das zweite Bodenbearbeitungsgerät bearbeitbaren Flächenteilbereich handelt. Des Weiteren kann die Nutzerschnittstelle auch eine Kommunikationsschnittstelle sein, über welche das erste Bodenbearbeitungsgerät Daten an ein externes Endgerät des Nutzers übermitteln kann, beispielsweise an ein mobiles Endgerät wie ein Mobiltelefon, einen Tablet-Computer oder ähnliches.

Schließlich kann vorgesehen sein, dass das zweite Bodenbearbeitungsgerät eingerichtet ist, in dem Fall, dass eine Bodenbearbeitung durch das zweite Bodenbearbeitungsgerät fehlschlägt, eine Information an das erste Bodenbearbeitungsgerät zu übermitteln, dass der bestimmte Flächenteilbereich nicht mittels des zweiten Bodenbearbeitungsgerätes bearbeitet werden kann. Gemäß dieser Ausgestaltung kann das zweite Bodenbearbeitungsgerät auch Informationen an das erste Bodenbearbeitungsgerät übermitteln, nämlich in dem Sinne, dass eine Information an das erste Bodenbearbeitungsgerät bzw. dementsprechend auch an den Nutzer übermittelt wird, dass ein bestimmter Flächenteilbereich nicht bearbeitet werden konnte. Anhand dieser Information wird der Nutzer darüber informiert, dass er diesen Flächenteilbereich manuell mittels des ersten Bodenbearbeitungsgerätes bearbeiten sollte.

### Kurze Beschreibung der Zeichnungen

Im Folgenden wird die Erfindung anhand von Ausführungsbeispielen näher erläutert. Es zeigen:
- Fig. 1: eine Umgebung mit einem System aus einem ersten Bodenbearbeitungsgerät und einem zweiten Bodenbearbeitungsgerät,

- Fig. 2: das erste Bodenbearbeitungsgerät in einer vergrößerten Darstellung,
- Fig. 3: das zweite Bodenbearbeitungsgerät in einer vergrößerten Darstellung,
- Fig. 4: das zweite Bodenbearbeitungsgerät mit einer Umgebungskarte, in welcher charakteristische Kennzahlen für bestimmte Flächenteilbereiche gespeichert sind.

### Beschreibung der Ausführungsformen

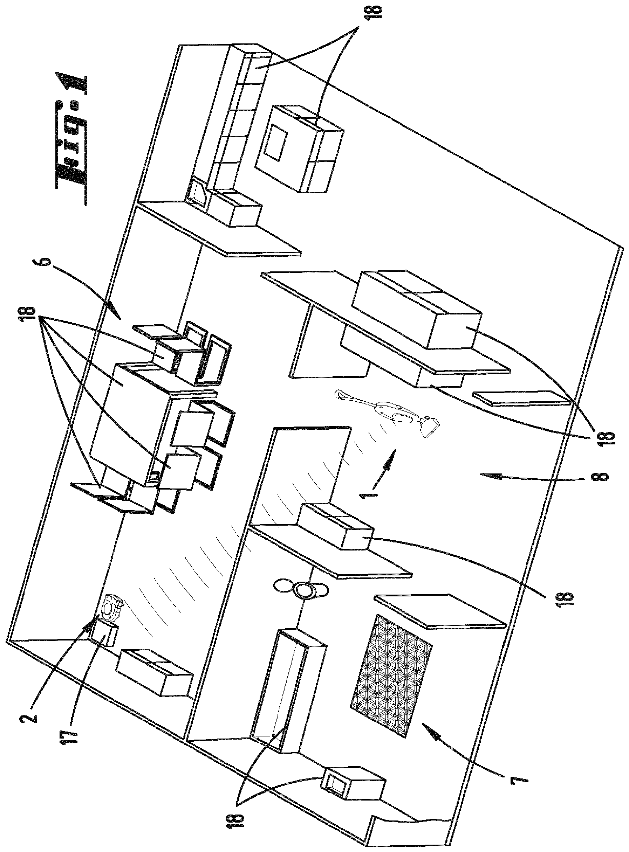

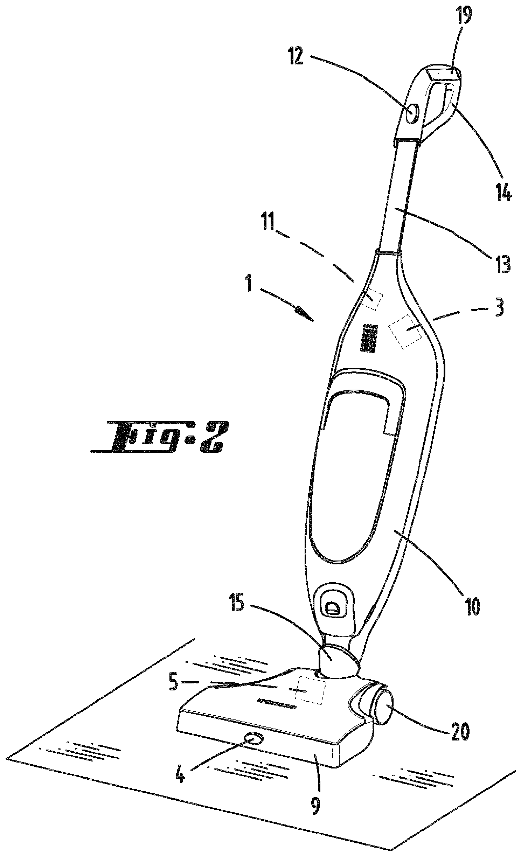

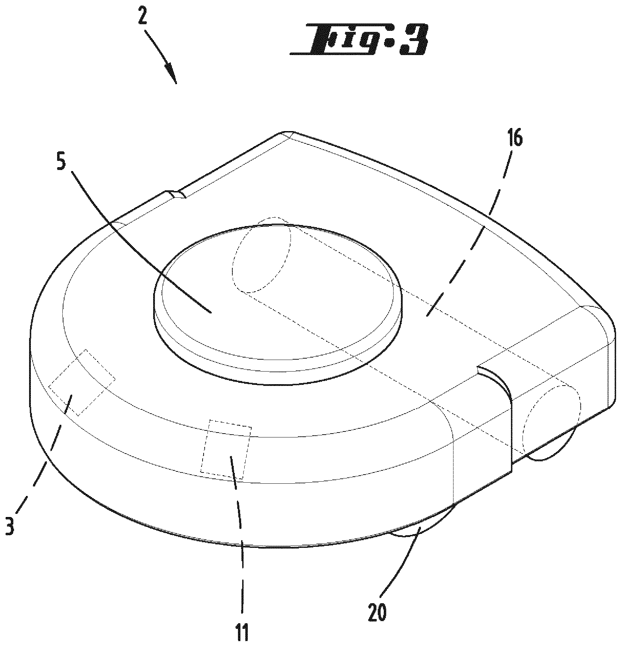

Figur 1 zeigt schematisch einen Grundriss einer Wohnung mit mehreren Räumen. In der Wohnung befinden sich ein ausschließlich manuell von einem Nutzer geführtes erstes Bodenbearbeitungsgerät 1 und ein ausschließlich automatisch betriebenes zweites Bodenbearbeitungsgerät 2. Das erste Bodenbearbeitungsgerät 1 ist hier beispielsweise ein handgeführter Staubsauger, welcher mit Bezug zu Figur 2 näher erläutert wird. Das automatisch betriebene Bodenbearbeitungsgerät 2 ist hier beispielsweise ein Saugroboter, welcher mit Bezug zu Figur 3 näher dargestellt wird.

Die Umgebung der Bodenbearbeitungsgeräte 1, 2 beinhaltet übliche Raumbegrenzungen wie Wände sowie andere Hindernisse 18. Zu den Hindernissen 18 gehört unter anderem Mobiliar wie ein Tisch mit einer Mehrzahl von Schwingstühlen. In der Umgebung befindet sich des Weiteren eine Basisstation 17 für das automatisch betriebene zweite Bodenbearbeitungsgerät 2. Diese Basisstation 17 weist Einrichtungen und Mittel auf, um Servicetätigkeiten an dem automatisch betriebenen zweiten Bodenbearbeitungsgerät 2 oder gegebenenfalls auch weiteren Bodenbearbeitungsgeräten 1, 2 durchzuführen. Zu den Servicetätigkeiten gehören beispielsweise das Aufladen eines Akkumulators eines Bodenbearbeitungsgerätes 1, 2, das Entleeren einer Staubsammelkammer eines Bodenbearbeitungsgerätes 1, 2, das Reinigen eines Bodenbearbeitungselementes 16 (siehe beispielsweise Figur 3) eines Bodenbearbeitungsgerätes 1,2 oder ähnliches.

In den Räumen der Umgebung existieren eine Vielzahl von unterschiedlichen Flächenteilbereichen 6, 7, 8 einer zu reinigenden Bodenfläche. Die Flächenteilbereiche 6, 7, 8 zeichnen sich durch unterschiedliche Parameter aus, beispielsweise unter anderem durch die Bodenart des zu reinigenden Flächenteilbereiches 6, 7, 8 oder in diesem Bereich befindliche Hindernisse 18. Die unterschiedlichen Räume sind hier beispielsweise ein Badezimmer, ein Flur, ein Esszimmer und eine Küche. In dem Esszimmer existiert ein Flächenteilbereich 6, welcher eine Anordnung eines Tisches mit mehreren Stühlen aufweist. Das Badezimmer weist unter anderem einen Flächenteilbereich 7 auf, welcher einen leicht verschiebbaren Badteppich beinhaltet. In dem Flur befinden sich nur ortsfeste Hindernisse 18 (Möbel), ansonsten ist der dortige Flächenteilbereich 8 hindernisfrei und der Bodenbelag beispielsweise ein leicht zu reinigender Hartboden. Gleiches gilt für die benachbarte Küche.

Das manuell von einem Nutzer geführte Bodenbearbeitungsgerät 1 weist gemäß Figur 2 ein Basisgerät 10 sowie eine lösbar über einen Verbindungsbereich 15 mit dem Basisgerät 10 verbundene Bodendüse 9 auf. Bei der Bodendüse 9 handelt es sich hier beispielhaft um eine Saugdüse mit einer nicht näher dargestellten unterseitigen Reinigungsbürste, welche ein Bodenbearbeitungselement 16 bildet. Die Bodendüse 9 weist Räder 20 auf, um das Bodenbearbeitungsgerät 1 insgesamt mit geringem Widerstand über die zu reinigende Bodenfläche bewegen zu können. Die Räder 20 oder auch das Bodenbearbeitungselement 16 können motorisch angetrieben sein, um die Fortbewegung des Bodenbearbeitungsgerätes 1 zu unterstützen und einem Nutzer die Handhabung zu erleichtern. Das Basisgerät 10 weist einen Stiel 13 mit einem Griff 14 auf. An dem Griff 14 ist ein Schalter 12 angeordnet, welcher dem An- und Ausschalten einer hier nicht näher dargestellten Saugeinrichtung dient. Des Weiteren ist es möglich, über den Schalter 12 beispielsweise verschiedene Saugleistungsstufen der Saugeinrichtung einzustellen. Des Weiteren ist an dem Griff 14 eine Nutzerschnittstelle 19 in Form eines Displays ausgebildet. Die Nutzerschnittstelle 19 kann einem Nutzer Mitteilungen durch Text und/oder Bild anzeigen. Das Bodenbearbeitungsgerät 1 weist des Weiteren eine Detektionseinrichtung 4 auf, welche hier eine an der Bodendüse 9 angeordnete Kamera ist. Die Kamera nimmt Bilder der Umgebung auf, insbesondere inklusive der Hindernisse 18 und der zu reinigenden Bodenfläche. Die Bodendüse 9 verfügt hier des Weiteren beispielsweise über eine Lokalisationseinrichtung oder Navigationseinrichtung 5, mittels welcher das Bodenbearbeitungsgerät 1 innerhalb der Umgebung lokalisiert werden kann. Dadurch können die von der Detektionseinrichtung 4 aufgenommenen Bilder einem bestimmten Ort in der Umgebung zugeordnet werden. Zur Verknüpfung der Bilder mit den Orten der Umgebung verfügt das Bodenbearbeitungsgerät 1 über eine hier beispielsweise in dem Basisgerät 10 angeordnete Recheneinrichtung 3. Die Recheneinrichtung 3 kann zur Lokalisierung des Bodenbearbeitungsgerätes 1 beispielsweise die Bilder der Detektionseinrichtung 4 heranziehen, und/oder beispielsweise auch die Messdaten eines Inertialsensors (hier nicht dargestellt), welcher den Rädern 20 der Bodendüse 9 zugeordnet ist, oder Messdaten eines anderen Sensors. Der Inertialsensor detektiert beispielsweise die Radumdrehung der Räder 20, so dass auf eine von dem Bodenbearbeitungsgerät 1 zurückgelegte Strecke und gegebenenfalls eine Richtungsänderung des Bodenbearbeitungsgerätes 1 während einer Fortbewegung durch die Umgebung geschlossen werden kann. Die Recheneinrichtung 3 dient des Weiteren zur Auswertung der von der Detektionseinrichtung 4 aufgenommenen Kamerabilder, um Parameter der detektierten Bodenfläche der Umgebung auszuwerten. Anhand der von der Detektionseinrichtung 4 detektierten Parameter kann die Recheneinrichtung 3 beispielsweise ermitteln, ob die Flächenteilbereiche 6, 7, 8 der Umgebung geeignet sind, durch das automatisch betriebene zweite Bodenbearbeitungsgerät 2 gereinigt zu werden. Die Reinigbarkeit mittels des zweiten Bodenbearbeitungsgerätes 2 könnte nämlich beispielsweise ausgeschlossen sein, wenn ein Flächenteilbereich 6, 7, 8 eine Vielzahl von eng zueinander stehenden Hindernissen 18 aufweist, zwischen welchen das zweite Bodenbearbeitungsgerät 2 nicht verfahren kann. Des Weiteren kann auch die Art des Bodenbelages eine automatische Reinigbarkeit durch das zweite Bodenbearbeitungsgerät 2 ausschließen.

Das erste Bodenbearbeitungsgerät 1 verfügt des Weiteren über ein Kommunikationsmodul 11, welches dazu dient, mit einem entsprechenden Kommunikationsmodul 11 des zweiten Bodenbearbeitungsgerätes 2 zu kommunizieren und insbesondere eine Information an das zweite Bodenbearbeitungsgerät 2 zu übermitteln, dass ein bestimmter Flächenteilbereich 6, 7, 8 für eine Bodenbearbeitung durch das zweite Bodenbearbeitungsgerät 2 geeignet oder nicht geeignet ist. Ebenso können auch Informationen in umgekehrte Richtung, d. h. von dem zweiten Bodenbearbeitungsgerät 2 an das erste Bodenbearbeitungsgerät 1 übermittelt werden. Die Kommunikationsmodule 11 sind hier beispielsweise WLAN-Module, welche eine drahtlose Kommunikation zwischen den Bodenbearbeitungsgeräten 1, 2 des Systems erlauben. Obwohl hier beispielhaft nur zwei Bodenbearbeitungsgeräte 1, 2 dargestellt sind, kann das System auch eine Mehrzahl von weiteren Bodenbearbeitungsgeräten 1, 2 aufweisen.

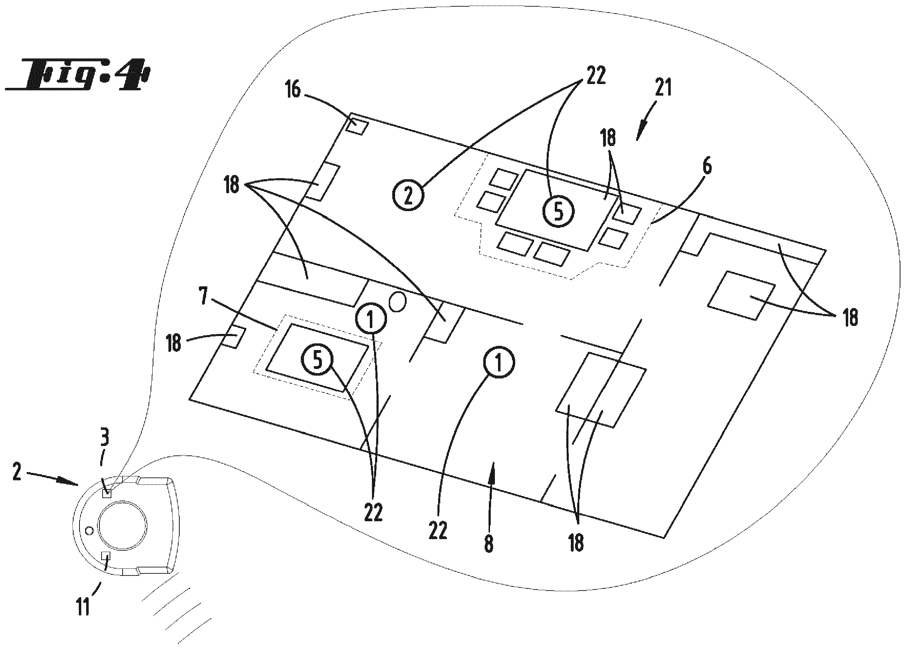

Das in Figur 3 näher dargestellte automatisch betriebene zweite Bodenbearbeitungsgerät 2 weist motorisch angetriebene Räder 20 sowie ein Bodenbearbeitungselement 16 auf, welches hier beispielsweise als rotierende Borstenwalze ausgebildet ist, deren Längserstreckung im Wesentlichen horizontal zu einer zu reinigenden Bodenfläche orientiert ist. Das zweite Bodenbearbeitungsgerät 2 verfügt über ein hier beispielsweise als WLAN-Modul ausgebildetes Kommunikationsmodul 11, um die Information des ersten Bodenbearbeitungsgerätes 1 empfangen zu können und/oder Informationen an das erste Bodenbearbeitungsgerät 1 übermitteln zu können. Das zweite Bodenbearbeitungsgerät 2 weist des Weiteren eine Recheneinrichtung 3 auf, welche eingerichtet ist, die Informationen des ersten Bodenbearbeitungsgerätes 1 auszuwerten und in Steuerbefehle umzusetzen, unter anderem auch in Steuerbefehle für eine Navigationseinrichtung 5 des zweiten Bodenbearbeitungsgerätes 2. Die Navigationseinrichtung 5 dient zum selbständigen Verfahren des zweiten Bodenbearbeitungsgerätes 2 innerhalb der Umgebung. Der Navigationseinrichtung 5 kann beispielsweise eine Abstandsmesseinrichtung, zum Beispiel ein Laserscanner, zugeordnet sein, der vorzugsweise in einem 360°-Winkelbereich Abstände zu Hindernissen 18 detektieren kann. Die Recheneinrichtung 3 verarbeitet die gemessenen Abstandsdaten zu einer beispielhaft in Figur 4 dargestellten Umgebungskarte 21, welche einen Grundriss der Umgebung, d. h. hier der Räume einer Wohnung, Orte von Hindernissen 18 inklusive Raumbegrenzungen, die Position der Basisstation 17 und ähnliches enthält. Die Umgebungskarte 21 dient zur Navigation und Selbstlokalisation des zweiten Bodenbearbeitungsgerätes 2 innerhalb der Umgebung. Zum Erstellen der Umgebungskarte 21 kann das Bodenbearbeitungsgerät 2 beispielsweise einen sogenannten SLAM-Algorithmus (Simultaneous Localization And Measurement-Algorithmus) verwenden.

Die Umgebungskarte 21 gemäß Figur 4 enthält des Weiteren Informationen über Parameter der in der Umgebung enthaltenen Flächenteilbereiche 6, 7, 8. Den Flächenteilbereichen 6, 7, 8 sind Kennzahlen 22 zugeordnet, die angeben, ob der zugeordnete Flächenteilbereich 6, 7, 8 für eine Bodenbearbeitung durch das automatisch betriebene zweite Bodenbearbeitungsgerät 2 geeignet ist. Hier reichen die Kennzahlen 22 von beispielsweise "1" bis "5", so dass insgesamt fünf verschiedene Stufen zur Bestimmung der Eignung zur Bearbeitung durch das zweite Bodenbearbeitungsgerät 2 gegeben sind. Die Kennzahl "1" steht hier für eine problemlos mögliche Reinigung des entsprechenden Flächenteilbereiches 6, 7, 8 mittels des zweiten Bodenbearbeitungsgerätes 2. Solche Flächenteilbereiche 6, 7, 8 sind hier beispielsweise Hartböden, insbesondere Fliesenboden, welche ohne weiteres von dem zweiten Bodenbearbeitungsgerät 2 gereinigt werden können. Die Kennzahl "2" steht beispielsweise für Flächenteilbereiche 6, 7, 8, welche einen Holzboden aufweisen und grundsätzlich ebenso problemlos zu reinigen sind (jedoch beispielsweise nicht zu nass gereinigt werden sollten). Die Kennzahl "5" gibt hingegen schwierig zu reinigende Flächenteilbereiche 6, 7, 8 an, in welchen eine Reinigung durch das zweite Bodenbearbeitungsgerät 2 nahezu ausgeschlossen ist. Hierzu zählen beispielsweise ein in dem Flächenteilbereich 7 vorhandener Badteppich, welcher von dem zweiten Bodenbearbeitungsgerät 2 nicht überwunden werden kann, oder eine in dem Flächenteilbereich 6 angeordnete Kombination aus einem Esstisch und einer Mehrzahl um diesen herum angeordneter Schwingstühle, deren Fußgestelle das zweite Bodenbearbeitungsgerät 2 nicht überwinden kann oder nicht überwinden soll. Die Kennzahlen 22 der Flächenteilbereiche 6, 7, 8 werden durch die Recheneinrichtung 3 des ersten Bodenbearbeitungsgerätes 1 festgelegt. Hierzu wird im Folgenden näher ausgeführt.

Die folgenden Ausführungen sind lediglich beispielhaft für die Verwendung eines erfindungsgemäßen Systems. Dabei versteht es sich, dass die Bodenbearbeitungsgeräte 1, 2 auch abweichend ausgestaltet sein können, beispielsweise nicht nur als Staubsauggeräte, sondern beispielsweise auch als Wischgeräte, Poliergeräte oder ähnliches. Die konkrete Art der Bodenbearbeitungsgeräte 1, 2 ändert die Funktionsweise des Systems nicht. Darüber hinaus kann das System neben den beiden hier dargestellten Bodenbearbeitungsgeräten 1, 2 auch noch eine Vielzahl weiterer Bodenbearbeitungsgeräte 1, 2 beinhalten oder andere Geräte, wie beispielsweise Serviceroboter, Überwachungsroboter oder ähnliche, die keine Bodenbearbeitungstätigkeiten ausführen, jedoch mit den dargestellten Bodenbearbeitungsgeräten 1, 2 im Sinne eines Heimnetzwerkes in Kommunikationsverbindung stehen und Daten, insbesondere zur Erstellung der Umgebungskarte 21, bereitstellen können.

Gemäß einer möglichen Ausführung funktioniert die Erfindung so, dass der Nutzer das erste, hier manuell geführte, Bodenbearbeitungsgerät 1 durch die in Figur 1 dargestellte Umgebung verschiebt, die im Wesentlichen durch die Umgebungskarte 21 gemäß Figur 4 wiedergegeben ist. Dabei verfolgt der Nutzer einen willkürlichen Bewegungspfad um die Flächenteilbereiche 6, 7, 8 der Umgebung zu reinigen. Während der Fortbewegung detektiert die Detektionseinrichtung 4 des ersten Bodenbearbeitungsgerätes 1 Merkmale der Umgebung, nämlich hier beispielsweise vorhandene Hindernisse 18 sowie Parameter der Bodenfläche in den Flächenteilbereichen 6, 7, 8 (und weiteren) der Umgebung. Die von der Detektionseinrichtung 4 detektierten Parameter werden mittels der Recheneinrichtung 3 des ersten Bodenbearbeitungsgerätes 1 ausgewertet, wobei diese Auswertung alternativ auch in einer zu dem ersten Bodenbearbeitungsgerät 1 externen Recheneinrichtung 3 vorgenommen werden könnte, beispielsweise in einem zentralen Server eines Heimnetzwerkes. zugeordnet ist. Des Weiteren alternativ könnten die Berechnungen auch in der Recheneinrichtung 3 des zweiten Bodenbearbeitungsgerätes 2 ausgeführt werden. Die von der Detektionseinrichtung 4 des ersten Bodenbearbeitungsgerätes 1 detektierten Parameter geben an, ob eine Bodenbearbeitung und/oder ein Befahren des jeweiligen Flächenteilbereiches 6, 7, 8 durch das zweite Bodenbearbeitungsgerät 2 möglich ist. Ein solcher Parameter kann die jeweilige Bodenart sein, oder auch beispielsweise eine auf der Bodenfläche vorhandene Verschmutzungsart, ein Verschmutzungsgrad der Verschmutzung oder die Existenz eines stehenden oder hängenden Hindernisses 18, welches die Befahrbarkeit des Flächenteilbereiches 6, 7, 8 durch das zweite Bodenbearbeitungsgerät 2 verhindert.

In dem hier vorliegenden Beispiel erkennt die Recheneinrichtung 3 des ersten Bodenbearbeitungsgerätes 1 beispielsweise, dass das Badezimmer einen Flächenteilbereich 7 mit einem hochflorigen Badteppich aufweist, welcher zu hoch ist, um von dem automatischen, zweiten Bodenbearbeitungsgerät 2 überwunden zu werden und/oder so leicht ist, dass das zweite Bodenbearbeitungsgerät 2 diesen bei dem Versuch einer Bearbeitung relativ zu dem Untergrund verschieben würde. Die Recheneinrichtung 3 ordnet diesem Flächenteilbereich 7 (wie in der Umgebungskarte gemäß Figur 4 näher dargestellt) die Kennzahl 22 "5" zu, was bedeutet, dass dieser Flächenteilbereich 7 nicht von dem zweiten Bodenbearbeitungsgerät 2 bearbeitet werden kann. Die Recheneinrichtung 3 des ersten Bodenbearbeitungsgerätes 1 übermittelt die Kennzahl 22 an das zweite Bodenbearbeitungsgerät 2, welches diese mittels der eigenen Recheneinrichtung 3 in die Umgebungskarte 21 einträgt und bei einer Bodenbearbeitung durch das zweite Bodenbearbeitungsgerät 2 berücksichtigt. Ebenso werden auch den weiteren Flächenteilbereichen 6, 8 der Umgebung Kennzahlen 22 zugeordnet. Der Flächenteilbereich 8 ist hier beispielsweise einem Flur der Wohnung zugehörig und weist einen leicht durch das zweite Bodenbearbeitungsgerät 2 zu reinigenden Fliesenboden auf. Der Flächenteilbereich 8 erhält daher die Kennzahl 22 "1". Das Esszimmer enthält einen Flächenteilbereich 6, mit einer Sitzgruppe aus einem Tisch und einer Vielzahl von Schwingstühlen, deren Bodengestelle nicht von dem zweiten Bodenbearbeitungsgerät 2 überwunden werden dürfen bzw. sollen. Dieser Flächenteilbereich 6 wird von der Detektionseinrichtung 4 detektiert und erhält von der Recheneinrichtung 3 die Kennzahl 22 "5", welche einen Flächenteilbereich 6 kennzeichnet, der nicht von dem zweiten Bodenbearbeitungsgerät 2 bearbeitet werden darf bzw. soll. Die neben dem Flächenteilbereich 6 im Übrigen in dem Esszimmer vorhandene Bodenfläche erhält die Kennzahl 22 "2", was bedeutet, dass diese durch das zweite Bodenbearbeitungsgerät 2 bearbeitet werden darf. Dieser Teilbereich ist beispielsweise mit einem Holzfußboden ausgestattet, welcher grundsätzlich leicht zu reinigen ist, jedoch beispielsweise keiner erhöhten Flüssigkeitszufuhr (zum Beispiel Wischflüssigkeit) ausgesetzt werden darf. In die Kennzahl 22 des jeweiligen Flächenteilbereiches 6, 7, 8 können neben der Bodenart bzw. einer Anordnung von Hindernissen 18 auch noch ein oder mehrere weitere Parameter des jeweiligen Flächenteilbereiches 6, 7, 8 einfließen, nämlich wie zuvor erwähnt beispielsweise eine dort vorhandene Verschmutzungsart, ein Verschmutzungsgrad, eine Verschmutzungshäufigkeit oder weitere. Für den jeweiligen Flächenteilbereich 6, 7, 8 kann die Recheneinrichtung 3 dann eine alle Parameter berücksichtigende charakteristische Kennzahl 22 ermitteln. Je näher diese Kennzahl 22 an der niedrigsten Kennzahl 22 "1" liegt, desto unproblematischer ist dort eine Reinigung durch das zweite Bodenbearbeitungsgerät 2 möglich. Je näher die Kennzahl 22 jedoch an der Kennzahl 22 "5" liegt, desto eher darf dieser Flächenteilbereich 6, 7, 8 nicht durch das zweite Bodenbearbeitungsgerät 2 bearbeitet werden. Die Kennzahl 22 berücksichtigt vorzugsweise ebenfalls Parameter des zweiten Bodenbearbeitungsgerätes 2, nämlich hier dessen räumliche Dimension, welche bestimmt, ob das zweite Bodenbearbeitungsgerät 2 zwischen in einem bestimmten Abstand zueinander stehenden Hindernissen 18 oder beispielsweise unter einem Hindernis 18, wie beispielsweise einem niedrigen Sofa oder Bett, fahren kann. Ebenso kann ein charakteristischer Geräteparameter auch eine Steighöhe des zweiten Bodenbearbeitungsgerätes 2 sein, welche angibt, ob das zweite Bodenbearbeitungsgerät 2 beispielsweise auf ein niedriges Hindernis 18 wie einen Teppich klettern kann.

Das erste Bodenbearbeitungsgerät 1 übermittelt die errechneten Kennzahlen 22 an das zweite Bodenbearbeitungsgerät 2, woraufhin das zweite Bodenbearbeitungsgerät 2 die Kennzahlen 22 in die Umgebungskarte 21 einträgt. Das zweite Bodenbearbeitungsgerät 2 kann die Kennzahlen 22 bei einer zeitlich nachfolgenden Bodenbearbeitung berücksichtigen und hier beispielsweise eine Einsatz- und/oder Pfadplanung so anpassen, dass Flächenteilbereiche 6, 7, welche die Kennzahl 22 "5" aufweisen, bei der Bearbeitung ausgespart werden, während der Flächenteilbereich 8 ohne Einschränkungen mittels des zweiten Bodenbearbeitungsgerätes 2 gereinigt wird. Das automatisch betriebene zweite Bodenbearbeitungsgerät 2 kann des Weiteren Bodenbearbeitungen gemäß eines gespeicherten Tätigkeitskalenders ausführen, welcher im Voraus geplante Tätigkeiten enthält, unter anderem beispielsweise auch zeitlich wiederkehrende Bearbeitungstätigkeiten.

Parallel zu der Übermittlung der Kennzahlen 22 von dem ersten Bodenbearbeitungsgerät 1 an das zweite Bodenbearbeitungsgerät 2, kann auch der Nutzer beispielsweise über die Nutzerschnittstelle 19 des ersten Bodenbearbeitungsgerätes 1 über Parameter eines Flächenteilbereiches 6, 7, 8 informiert werden. Beispielsweise wird der Nutzer bereits während einer manuellen Reinigung dieser Flächenteilbereiche 6, 7, 8 von der Nutzerschnittstelle 19 darauf aufmerksam gemacht, dass er aktuell einen Flächenteilbereich 6, 7, 8 reinigt, der alternativ auch mit dem zweiten Bodenbearbeitungsgerät 2 gereinigt werden könnte. Dies eröffnet dem Nutzer die Möglichkeit, die manuelle Reinigung dieses Flächenteilbereiches 6, 7, 8 zu beenden und die Reinigung stattdessen dem zweiten Bodenbearbeitungsgerät 2 zu überlassen. Dadurch kann der Nutzer effektiv Zeit bei der Bearbeitung der gesamten Wohnung sparen.

Andererseits kann das zweite Bodenbearbeitungsgerät 2 auch Nachrichten an das erste Bodenbearbeitungsgerät 1 übermitteln, nämlich beispielsweise eine Information über das Auftreten eines Problems während der automatischen Bearbeitung eines Flächenteilbereiches 6, 7, 8. Das erste Bodenbearbeitungsgerät 1 empfängt diese Informationen und kann dann wiederum den Nutzer über die Nutzerschnittstelle 19 auf das vorliegende Problem aufmerksam machen. Der Nutzer kann in diesen Flächenteilbereichen 6, 7, 8 dann beispielsweise eine manuelle Bodenbearbeitung vornehmen. Die Nutzerschnittstelle 19 kann anstelle eines Displays beispielsweise auch eine Datenkommunikationsschnittstelle aufweisen, über welche eine Nachricht an ein externes Endgerät, wie beispielsweise ein Mobiltelefon, übermittelt wird.

Darüber hinaus kann das zweite Bodenbearbeitungsgerät 2, beispielsweise anhand der Umgebungskarte 21, eine Information an das erste Bodenbearbeitungsgerät 1 übermitteln, welche Flächenteilbereiche 6, 7, 8 das zweite Bodenbearbeitungsgerät 2 selbst bearbeiten kann. In diesem Sinne kann das zweite Bodenbearbeitungsgerät 2 Flächenteilbereiche 6, 7, 8 erkennen, die eine besonders niedrige Kennzahl 22 aufweisen oder die zusammenhängende Bereiche bilden, die, ohne Hindernisse 18 überwinden zu müssen, erreicht werden können. Das zweite Bodenbearbeitungsgerät 2 kann diese Flächenteilbereiche 6, 7, 8 in Zukunft autonom anfahren, wobei der Nutzer dann darüber informiert werden kann, dass diese Flächenteilbereiche 6, 7, 8 bereits automatisch durch das zweite Bodenbearbeitungsgerät 2 gereinigt wurden und somit keine manuelle Reinigung durch den Nutzer mehr erfordern.

### Liste der Bezugszeichen

- 1: Erstes Bodenbearbeitungsgerät
- 2: Zweites Bodenbearbeitungsgerät
- 3: Recheneinrichtung
- 4: Detektionseinrichtung
- 5: Navigationseinrichtung
- 6: Flächenteilbereich
- 7: Flächenteilbereich
- 8: Flächenteilbereich
- 9: Bodendüse
- 10: Basisgerät
- 11: Kommunikationsmodul
- 12: Schalter
- 13: Stiel
- 14: Griff
- 15: Verbindungsbereich
- 16: Bodenbearbeitungselement
- 17: Basisstation
- 18: Hindernis
- 19: Nutzerschnittstelle
- 20: Rad
- 21: Umgebungskarte
- 22: Kennzahl

## Patentansprüche

1. System aus einem manuell von einem Nutzer innerhalb einer Umgebung geführten ersten Bodenbearbeitungsgerät (1), einem ausschließlich automatisch betriebenen zweiten Bodenbearbeitungsgerät (2) und einer Recheneinrichtung (3), wobei das erste Bodenbearbeitungsgerät (1) eine Detektionseinrichtung (4) zur Detektion eines Parameters der Umgebung und/oder einer zu bearbeitenden Fläche aufweist, und wobei das zweite Bodenbearbeitungsgerät (2) eine Navigationseinrichtung (5) zur Navigation und Selbstlokalisierung in der Umgebung aufweist, **dadurch gekennzeichnet, dass** die Recheneinrichtung (3) eingerichtet ist, anhand des von der Detektionseinrichtung (4) des ersten Bodenbearbeitungsgerätes (1) detektierten Parameters zu ermitteln, ob ein bestimmter Flächenteilbereich (6, 7, 8) der zu bearbeitenden Fläche für eine Bodenbearbeitung durch das zweite Bodenbearbeitungsgerät (2) geeignet ist.

2. System nach Anspruch 1, **dadurch gekennzeichnet, dass** der von der Detektionseinrichtung (4) des ersten Bodenbearbeitungsgerätes (1) detektierte Parameter ein die Bodenbearbeitung und/oder Befahrbarkeit des Flächenteilbereiches (6, 7, 8) einschränkender und/oder verhindernder Parameter des Flächenteilbereiches (6, 7, 8) ist.

3. System nach Anspruch 1 oder 2, **dadurch gekennzeichnet, dass** der Parameter eine Bodenart, eine Verschmutzungsart, ein Verschmutzungsgrad, eine Verschmutzungshäufigkeit und/oder ein stehendes oder hängendes Hindernis (18) ist.

4. System nach einem der vorhergehenden Ansprüche, **dadurch gekennzeichnet, dass** die Recheneinrichtung (3) eingerichtet ist, aus mindestens einem detektierten Parameter eine für einen bestimmten Flächenteilbereich (6, 7, 8) charakteristische Kennzahl (22) zu errechnen.

5. System nach Anspruch 4, **dadurch gekennzeichnet, dass** die charakteristische Kennzahl (22) zusätzlich von einem Parameter des zweiten Bodenbearbeitungsgerätes (2) abhängig ist.

6. System nach Anspruch 5, **dadurch gekennzeichnet, dass** der Parameter des zweiten Bodenbearbeitungsgerätes (2) ein charakteristischer Geräteparameter und/oder Bearbeitungsparameter des zweiten Bodenbearbeitungsgerätes (2) ist.

7. System nach einem der vorhergehenden Ansprüche, **dadurch gekennzeichnet, dass** das erste Bodenbearbeitungsgerät (1) eingerichtet ist, eine Information an das zweite Bodenbearbeitungsgerät (2) zu übermitteln, dass der bestimmte Flächenteilbereich (6, 7, 8) für eine Bodenbearbeitung durch das zweite Bodenbearbeitungsgerät (2) geeignet ist und/oder dass das zweite Bodenbearbeitungsgerät (2) eingerichtet ist, eine Information an das erste Bodenbearbeitungsgerät (1) zu übermitteln, ob der bestimmte Flächenteilbereich (6, 7, 8) für eine Bodenbearbeitung durch das zweite Bodenbearbeitungsgerät (2) geeignet ist.

8. System nach Anspruch 7, **dadurch gekennzeichnet, dass** das zweite Bodenbearbeitungsgerät (2) eine Recheneinrichtung (3) aufweist, die eingerichtet ist, die Information bei einer Navigation mittels der Navigationseinrichtung (5) und/oder bei einer anhand eines Tätigkeitskalenders im Voraus geplanten Tätigkeit zu berücksichtigen, so dass das zweite Bodenbearbeitungsgerät (2) den definierten Flächenteilbereich (6, 7, 8) bearbeitet.

9. System nach einem der vorhergehenden Ansprüche, **dadurch gekennzeichnet, dass** das erste Bodenbearbeitungsgerät (1) eine Nutzerschnittstelle (19) aufweist, mittels welcher einem Nutzer angezeigt wird, dass ein bestimmter Flächenteilbereich (6, 7, 8) der zu bearbeitenden Fläche, insbesondere ein aktuell von dem ersten Bodenbearbeitungsgerät (1) überfahrener Flächenteilbereich (6, 7, 8), für eine Bodenbearbeitung durch das zweite Bodenbearbeitungsgerät (2) geeignet ist.

10. System nach einem der vorhergehenden Ansprüche, **dadurch gekennzeichnet, dass** das zweite Bodenbearbeitungsgerät (2) eingerichtet ist, in dem Fall, dass eine Bodenbearbeitung durch das zweite Bodenbearbeitungsgerät (2) fehlschlägt, eine Information an das erste Bodenbearbeitungsgerät (1) zu übermitteln, dass der bestimmte Flächenteilbereich (6, 7, 8) nicht mittels des zweiten Bodenbearbeitungsgerätes (2) bearbeitet werden kann.

## Claims

1. A system comprised of a first floor processing device (1) guided manually by a user within an environment, a second, exclusively automatically operated floor processing device (2), and a computing device (3), wherein the first floor processing device (1) has a detection device (4) for detecting a parameter of the environment and/or a surface to be processed, and wherein the second floor processing device (2) has a navigation device (5) for navigating and self-localizing in the environment, **characterized in that** the computing device (3) is set up, based on the parameter detected by the detection device (4) of the first floor processing device (1), to determine whether a specific partial surface area (6, 7, 8) of the surface to be processed is suitable for floor processing by the second floor processing device (2).

2. The system according to claim 1, **characterized in that** the parameter detected by the detection device (4) of the first floor processing device (1) is a parameter of the partial surface area (6, 7, 8) that limits and/or prevents the floor processing and/or navigability of the partial surface area (6, 7, 8).

3. The system according to claim 1 or 2, **characterized in that** the parameter is a floor type, a contamination type, a contamination level, a contamination frequency and/or a standing or hanging obstacle (18).

4. The system according to one of the preceding claims, **characterized in that** the computing device (3) is set up to calculate a metric (22) characteristic for a specific partial surface area (6, 7, 8) from at least one detected parameter.

5. The system according to claim 6, **characterized in that** the characteristic metric (22) additionally is dependent on a parameter of the second floor processing device (2).

6. The system according to claim 5, **characterized in that** the parameter of the second floor processing device (2) is a characteristic device parameter and/or processing parameter of the second floor processing device (2).

7. The system according to one of the preceding claims, **characterized in that** the first floor processing device (1) is set up to transmit information to the second floor processing device (2) indicating that the determined partial surface area (6, 7, 8) is suitable for floor processing by the second floor processing device (2) and/or that the second floor processing device (2) is set up to transmit information to the first floor processing device (1) as to whether the determined partial surface area (6, 7, 8) is suitable for floor processing by the second floor processing device (2).

8. The system according to claim 7, **characterized in that** that the second floor processing device (2) has a computing device (3), which is set up to consider the information during a navigation by means of the navigation device (5) and/or given an activity planned in advance based on an activity calendar, so that the second floor processing device (2) processes the defined partial surface area (6, 7, 8).

9. The system according to one of the preceding claims, **characterized in that** the first floor processing device (1) is a user interface (19), which indicates to the user that a specific partial surface area (6, 7, 8) of the surface to be processed, in particular a partial surface area (6, 7, 8) currently being traversed by the first floor processing device (1), is suitable for floor processing by the second floor processing device (2).

10. The system according to one of the preceding claims, **characterized in that** the second floor processing device (2) is set up, in the event that a floor processing operation by the second floor processing device (2) fails, to transmit information to the first floor processing device (1) that the specific partial surface area (6, 7, 8) cannot be processed by means of the second floor processing device (2).

## Revendications

1. Système composé d'un premier appareil de traitement du sol (1) guidé manuellement par un utilisateur à l'intérieur d'un environnement, d'un deuxième appareil de traitement du sol (2) à fonctionnement exclusivement automatique et d'un dispositif de calcul (3), dans lequel le premier appareil de traitement du sol (1) présente un dispositif de détection (4) pour détecter un paramètre de l'environnement et/ou d'une surface à traiter, et dans lequel le deuxième appareil de traitement du sol (2) présente un dispositif de navigation (5) pour la navigation et l'auto-localisation dans l'environnement, **caractérisé en ce que** le dispositif de calcul (3) est configuré pour déterminer, sur la base du paramètre détecté par le dispositif de détection (4) du premier appareil de traitement du sol (1), si une zone de surface partielle déterminée (6, 7, 8) de la surface à traiter est apte pour un traitement de sol par le deuxième appareil de traitement du sol (2).

2. Système selon la revendication 1, **caractérisé en ce que** le paramètre détecté par le dispositif de détection (4) du premier appareil de traitement du sol (1) est un paramètre de la zone de surface partielle (6, 7, 8) qui limite et/ou empêche le traitement de sol et/ou la praticabilité de la zone de surface partielle (6, 7, 8).

3. Système selon la revendication 1 ou 2, **caractérisé en ce que** le paramètre est un type de sol, un type de salissure, un degré de salissure, une fréquence de salissure et/ou un obstacle debout ou suspendu (18).

4. Système selon l'une des revendications précédentes, **caractérisé en ce que** le dispositif de calcul (3) est configuré pour calculer à partir d'au moins un paramètre détecté un nombre caractéristique (22) pour une zone de surface partielle déterminée (6, 7, 8).

5. Système selon la revendication 4, **caractérisé en ce que** le nombre caractéristique (22) dépend en outre d'un paramètre du deuxième appareil de traitement du sol (2).

6. Système selon la revendication 5, **caractérisé en ce que** le paramètre du deuxième appareil de traitement du sol (2) est un paramètre caractéristique de l'appareil et/ou de traitement du deuxième appareil de traitement du sol (2).

7. Système selon l'une des revendications précédentes, **caractérisé en ce que** le premier appareil de traitement du sol (1) est configuré pour transmettre au deuxième appareil de traitement du sol (2) une information selon laquelle la zone de surface partielle déterminée (6, 7, 8) est apte pour un traitement de sol par le deuxième appareil de traitement du sol (2) et/ou **en ce que** le deuxième appareil de traitement du sol (2) est configuré pour transmettre au premier appareil de traitement du sol (1) une information selon laquelle la zone de surface partielle déterminée (6, 7, 8) est apte pour un traitement de sol par le deuxième appareil de traitement du sol (2).

8. Système selon la revendication 7, **caractérisé en ce que** le deuxième appareil de traitement du sol (2) présente un dispositif de calcul (3) qui est configuré pour prendre en compte l'information lors de la navigation au moyen du dispositif de navigation (5) et/ou lors d'une activité planifiée à l'avance sur la base d'un calendrier d'activités, de manière que le deuxième appareil de traitement du sol (2) traite la zone de surface partielle définie (6, 7, 8).

9. Système selon l'une des revendications précédentes, **caractérisé en ce que** le premier appareil de traitement du sol (1) présente une interface utilisateur (19) au moyen de laquelle il est indiqué à un utilisateur qu'une zone de surface partielle déterminée (6, 7, 8) de la surface à traiter, en particulier une zone de surface partielle (6, 7, 8) actuellement traversée par le premier appareil de traitement du sol (1), est apte pour un traitement de sol par le deuxième appareil de traitement du sol (2).

10. Système selon l'une des revendications précédentes, **caractérisé en ce que** le deuxième appareil de traitement du sol (2) est conçu, en cas d'échec du traitement de sol par le deuxième appareil de traitement du sol (2), pour transmettre au premier appareil de traitement du sol (1) une information selon laquelle la zone de surface partielle déterminée (6, 7, 8) ne peut pas être traitée au moyen du deuxième appareil de traitement du sol (2).
